# EUROPÄISCHE PATENTANMELDUNG

(11) **EP 1 902 772 A2**
(43) Veröffentlichungstag der Anmeldung: **26.03.2008**
(21) Anmeldenummer: 07018072.4
(22) Anmeldetag: 14.09.2007
(51) Int. Cl.: B01D 61/14, B01D 61/20, B41F 7/32

(54) **Vorrichtung zur Reinigung des Feuchtmittels für den Offset-Druck**

(30) Priorität: 20.09.2006 DE 202006014582 U
(71) Anmelder: Technotrans AG, 48336 Sassenberg (DE)
(72) Erfinder: Walczyk, Christian, 48155 Münster (DE); Holtwick, Robert, Dr., 48291 Telgte (DE)
(74) Vertreter: Steinmeister, Helmut

(57) **Zusammenfassung**

Vorrichtung zur Reinigung des Feuchtmittels für den Offset-Druck, bei der dass das zu reinigende Feuchtmittel über die Oberfläche einer Querstromfiltermembran (22) hinweg strömt, mit wenigstens einer Kühleinrichtung (16) zum Kühlen des Feuchtmittels im Zusammenhang mit der Querstromfiltration.

## Beschreibung

Die Erfindung betrifft eine Vorrichtung zur Reinigung des Feuchtmittels für den Offset-Druck.

Beim Drucken mithilfe des Offset-Drucks werden die Oberflächen der Druckplatten mit einem Feuchtmittel benetzt, das die Annahme von Druckfarben an den nicht-druckenden Stellen der Druckplatte verhindert. Feuchtmittel dieser Art bestehen im allgemeinen überwiegend aus Wasser, enthalten jedoch eine Reihe von Zusätzen, insbesondere Alkohol sowie antikorrosive und antimikrobielle Stoffe, oberflächenaktive Substanzen und dergleichen. Da der Alkohol bei den üblichen Betriebstemperaturen flüchtig ist, ist es üblich, das Feuchtmittel in geeigneter Weise zu kühlen oder kühl zu halten. Im allgemeinen zirkuliert das Feuchtmittel in einem Kreislauf zwischen der Druckmaschine und einem Sammeltank, in dem es gegebenenfalls gereinigt, gekühlt und in bezug auf seine Bestandteile ergänzt wird.

Die Reinigung des Feuchtmittels kann in verschiedener Weise erfolgen.

Bekannt ist beispielsweise der Einsatz von Zentrifugal-Separatoren, jedoch ist es auch möglich, das Feuchtmittel mithilfe geeigneter Filtereinrichtung zu filtern.

Die bisher bekannten Reinigungseinrichtungen sind vor allem deshalb verbesserungsfähig, weil die Reinigungswirkung, insbesondere hinsichtlich feiner Schmutzpartikel begrenzt ist und/oder ein erheblich apparativer Aufwand betrieben werden muß. Soweit die bekannten Reinigungsverfahren mit einer Erwärmung des Feuchtmittels einhergehen, ergeben sich Nachteile für das Feuchtmittel. So können die flüchtigen Bestandteile des Feuchtmittels, insbesondere Alkohol, in verstärktem Maße verdunsten.

Der Erfindung liegt die Aufgabe zugrunde, eine Vorrichtung zur Reinigung des Feuchtmittels zu schaffen, die eine besonders gründliche Reinigung und Befreiung des Feuchtmittels von Schmutzpartikeln ermöglicht, ohne dass eine nennenswerte Erwärmung des Feuchtmittels in Kauf genommen werdenmuß.

Eine erfindungsgemäße Vorrichtung zur Reinigung des Feuchtmittels für den Offset-Druck ist derart aufgebaut, dass das zu reinigende Feuchtmittel über die Oberfläche einer Querstromfiltrationsmembran hinweg strömt, wobei wenigstens eines Kühleinrichtung zum Kühlen des Feuchtmittels im Zusammenhang mit der Querstromfiltration vorgesehen ist.

Bei der Querstromfiltration wird das Feuchtmittel kontinuierlich über eine Querstromfiltrationsmembran befördert. Dies geschieht mithilfe einer Pumpe. Der Betrieb der Pumpe führt zwangsläufig zu einer kontinuierlichen Erwärmung des Feuchtmittels und damit zu den genannten Problemen, nämlich einer Schädigung bzw. Zerstörung der Feuchtmittelbestandteile und zu einer verstärkten Verdampfung des Alkohols. Verdampfender Alkohol kann gegebenenfalls sogar zur Bildung explosionsfähiger Glasgemische führen.

Es ist daher ein wesentlicher Vorteil der vorliegenden Erfindung, dass die Erfindung die effektive Reinigungwirkung der Querstromfiltrationsmembran mit einer Kühlung des Feuchtmittels kombiniert.

Die Kühlung kann in sehr unterschiedlicher Weise erfolgen. Grundsätzlich kann ein separates Kühlsystem vorgesehen sein, oder das Kühlsystem, das ohnehin zur Temperierung des Feuchtmittels verwendet wird, kann entsprechend erweitert werden.

Die Kühlung kann mithilfe von Kühlkörpern, insbesondere Kühlschlangen erfolgen, die sich innerhalb des Sammeltanks befinden. Durch diese Kühlkörper kann ein Kühlmedium geleitet werden, das einen Kälteprozeß in einer Kältemaschine durchlaufen kann. Es ist auch möglich, das Feuchtmittel auf seiner Zirkulationsbahn zwischen der Druckmaschine und dem Sammelbehälter durch gekühlte Leitungen zu führen.

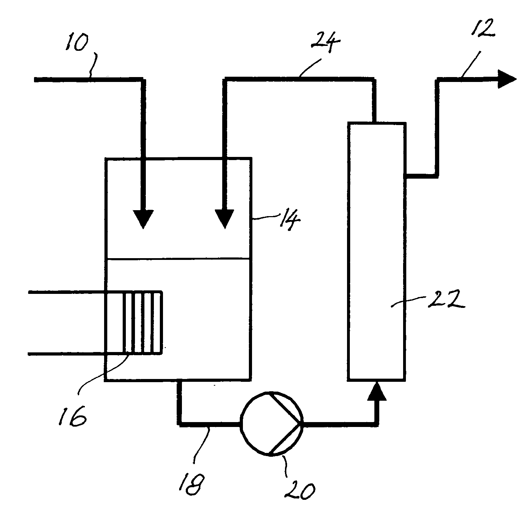

Im folgenden werden bevorzugte Ausführungsbeispiele der Erfindung anhand der beigefügten Zeichnung näher erläutert.

Die einzige Figur ist eine schematische Darstellung einer erfindungsgemäßen Reinigungsvorrichtung.

Die erfindungsgemäße Reinigungsvorrichtung nimmt gebrauchtes, gegebenenfalls verschmutztes oder erwärmtes Feuchtmittel über eine Leitung 10 auf und gibt gereinigtes Feuchtmittel über eine andere Leitung 12 im Kreislauf an die nicht dargestellte Druckmaschine zurück. Auf diese Weise wird das Feuchtmittel während des Betriebs der Druckmaschine ständig umgewälzt und wiederholt verwendet.

Die Reinigungsvorrichtung umfaßt zunächst einen Sammelbehälter 14, in den das Feuchtmittel, das von der Druckmaschine zurückkehrt, über die Leitung 10 eingeleitet wird. Im Sammelbehälter befindet sich eine Kühleinrichtung 16, schematisch angedeutet durch eine geeignete Wärmetauschereinrichtung, wie etwa eine Anzahl von Kühlrohren oder Kühlschlangen.

Bei der dargestellten Ausführungsform wird das Feuchtmittel nach der Abkühlung über eine Leitung 18, in der sich eine Pumpe 20 befindet, einer Querstromfiltrationsmembran 22 zugeleitet. Diese Querstromfiltrationsmembran, die sich vorzugsweise in einem nicht dargestellten, angepaßten Gehäuse befindet, gibt das über die Querstromfiltrationsmembran hinweglaufende Feuchtmittel über eine Leitung 24 in den Sammelbehälter 14 zurück. Das Feuchtmittel wird also zwischen dem Sammelbehälter und der Querstromfiltrationsmembran im Kreislauf umgewälzt. Naturgemäß ist für die Anordnung aus Sammelbehälter 14, Kühleinrichtung 16 und Querstromfiltrationsmembran 22 zweckmäßigerweise eine kompakte, zusammengefaßte Einrichtung vorgesehen und nicht die in der Zeichnung schematisch dargestellte Nebeneinanderstellung des Sammelbehälters 14 und der Querstromfiltrationsmembran. Konstruktive Möglichkeiten existieren insoweit in erheblicher Anzahl.

Das Feuchtmittel strömt über die Querstromfiltrationsmembran hinweg. Dabei treten Teile des Flüssiganteils durch die Querstromfiltrationsmembran hindurch auf die Ausgangsseite der Membran. Von hier aus werden sie über die bereits erwähnte Leitung 12 als gereinigtes Feuchtmittel an die nicht dargestellte Druckmaschine zurückgeführt.

## Patentansprüche

1. Vorrichtung zur Reinigung des Feuchtmittels für den Offset-Druck, bei der dass das zu reinigende Feuchtmittel über die Oberfläche einer Querstromfiltermembran (22) hinweg strömt, mit wenigstens einer Kühleinrichtung (16) zum Kühlen des Feuchtmittels im Zusammenhang mit der Querstromfiltration.

2. Vorrichtung nach Anspruch 1, mit einem Sammelbehälter (14) zur Aufnahme und Behandlung des von der Druckmaschine zurückgeführten Feuchtmittels, **dadurch gekennzeichnet, dass** im Sammelbehälter (14) von einem Kühlmedium durchströmte Kühlkörper vorgesehen sind.

3. Vorrichtung nach Anspruch 2, **dadurch gekennzeichnet, dass** die Kühlkörper Kühlrohre oder Kühlschlangen sind.
